# EUROPÄISCHE PATENTSCHRIFT

(11) **EP 2 408 018 B1**
(45) Veröffentlichungstag und Bekanntmachung des Hinweises auf die Patenterteilung: **03.12.2014**
(21) Anmeldenummer: 11075036.1
(22) Anmeldetag: 02.03.2011
(51) Int. Cl.: F24J 2/04, H01L 31/048, H01L 31/0525

(54) **Solardach-oder Solarfassaden-Konstruktion**
Solar roof or solar facade construction
Construction de toits solaires ou de façades solaires

(30) Priorität: 03.03.2010 DE 102010010457
(43) Veröffentlichungstag der Anmeldung: 18.01.2012
(73) Patentinhaber: Grosse, Bernd L., 03140 Guardamar Alicante (ES)
(72) Erfinder: Grosse, Bernd L., 03140 Guardamar Alicante (ES)
(74) Vertreter: Kayser, Christoph

(56) Entgegenhaltungen:
- EP-A2- 2 009 704
- DE-A1- 4 216 171
- US-A- 5 935 343

## Beschreibung

Die Erfindung betrifft eine Solardach- oder Solarfassaden- Konstruktion umfassend eine Photovoltaikanlage mit Dachelementen aus Faserzement, Beton, Ton, Metall, Kunststoff, die reihenweise zueinander versetzt und überlappend angeordnet sind und wobei der nicht überlappende Bereich Solarzellen aufweist, die zur Erzeugung von Strom über Kontaktmittel miteinander elektrisch verbindbar sind und mit einer Thermieanlage mit Solarkollektoren und einem Rohrleitungssystem, in dem ein Wärmeträgermedium zirkuliert.

Als nächstkommender Stand der Technik ist eine Solardach- Konstruktionen mit einem Photovoltaik- und einem Thermiesystem entsprechend der DE 42 16 171 A1 bekannt. Die versetzt angeordneten und mit Solarzellen beschichteten Dachelemente gemäß dieser Schrift sind aus Metall, vorzugsweise Aluminium, gefertigt und sollen die Funktion eines Dachelementes und eines Wärmekollektors und einer Solarzelle erfüllen. Befestigt werden die Dachelemente durch Einhängen an ein Rohrsystem, welches eine Dachlattung ersetzt. Durch das Rohrsystem wird ein Wärmeträger gepumpt, der die von den Metall-Dachelementen abgegebene Wärme aufnehmen soll.

Zur Wärmeübertragung sind gemäß dieser Schrift nur Metallelemente vorgesehen. Das Rohrsystem muss die gesamte Last der Dachkonstruktion tragen und ist vor Verbiegungen und damit verbundenen Leckagen nicht geschützt. Weiterhin wird dieses Solardach auch nicht in Gegenden mit intensiver Sonneneinstrahlung funktionieren. Metalle heizen sich sehr schnell auf und eine Wärmeableitung kann dann nicht genügend Schutz der Solarzellen und elektrischen Verbindungsmittel vor Überhitzung bzw. Thermalisierung bieten. Somit ist die Funktionsfähigkeit dieser Solarzellen nur in einem gewissen mittleren Temperaturbereich gegeben.

Ein Element zur Dacheindeckung, das sowohl elektrische wie auch thermische Energie liefert beschreibt die DE 20 2007 005 302 U1. Diese Schrift zeigt einen Kollektor, der aus zwei nicht miteinander in Verbindung stehenden, jedoch in einem abgedichteten Gehäuse angeordneten, Modulen besteht. Im oberen Teil ist ein semitransparentes Photovoltaikmodul und im unteren Teil ein solarthermisches Modul angeordnet. Beide Module trennt ein Isolationsraum. Der Transparenzgrad des Photovoltaikmoduls bestimmt hierbei die vom Modul aufgenommene und an das solarthermische Modul abgegebene Wärmestrahlung. Der Kollektor selbst ist ein starres Bauteil, in welchem Materialien mit unterschiedlichen Wärmausdehnungskoeffizienten für Spannungen sorgen und somit auch für Formveränderungen, so dass zwischen den einzelnen Kollektoren leicht Spalten und Ritzen entstehen. Weiterhin sind sowohl die Herstellung als auch die Montage dieser Kollektoren aufwendig und daher mit hohen Kosten verbunden.

Eine weitere Schrift, die DE 20 2008 002 585 U1, zeigt ebenfalls einen Kollektor für Solar- und Thermieenergie. Der Thermie- und Solarkollektor besteht hierbei aus einer planen Oberfläche aus dünnem Blech, in bevorzugter Weise aus Aluminium, unter dem der Wärmetauscher angeordnet ist. Die Solarzellen, Solarlaminate oder Folien sind hierbei direkt oder mittels einer Beschichtung auf dem Blech angebracht.
Die Wärmeübertragung erfolgt direkt und ohne wärmende Zwischenschicht an eine Wärmeträgerflüssigkeit. Unterhalb des Wärmetauschers ist eine Kunststofffolie oder ein Kunststoffschaumpaket vorgesehen, das gegen das Abdeckblech drückt und mit diesem fest verschweißt ist, so dass sich die Wärmeträgerflüssigkeit in einem dichten Kunststoffbeutel befindet. Ein unteres Abdeckblech wird mit dem oberen Blech verschweißt und bildet so den Metallrahmen für die Montage bzw. die Aneinanderreihung von mehreren Kollektoren auf z. B. extra vorgesehenen Montageleisten. Die Zuführung der Thermoflüssigkeit mittels Rohren, die durch das untere Abdeckblech und das Isoliermaterial geführt sind, erfolgt an der Unterseite des Kollektors.

Gemäß dem Stand der Technik ist es weiterhin bekannt, beispielsweise gemäß der DE 26 42 732 C2 oder DE 20 2005 018 137 U1, ein Solardach vorzusehen, bei welchem die einzelnen Dachelemente direkt von einem Wärmeträger durchflossen werden. Gemäß der DE 26 42 732 sind die mit Solarzellen versehenen Dachelemente auf Dachlatten angebracht. Jede Dachlatte weist zwei parallel verlaufende Kanäle zum Zuführen und Ableiten eines Wärmeträgers auf, die mit einer entsprechenden Ablauf- und Zulaufleitung im Dachelement dichten verbunden sind, so dass das Dachelement selbst vom Wärmeträger durchströmt wird. Gemäß dieser Schrift ist also ein vorher bestimmtes innerhalb der Dachlatten selbst angebrachtes Rohrsystem erforderlich, das genau mit den entsprechenden Kanälen der jeweiligen Dachelemente korrespondiert. Dies erfordert ein an die Dachelemente angepasstes Lattensystem und einen großen Montageaufwand.
Bezüglich der Anordnung der elektrischen Verbindungen der Solarzellen sind dieser Schrift keine Hinweise zu entnehmen.

Eine weitere Schrift, die DE 20 2005 018 137 U1, beschreibt einen aus einem Oberteil und einem Unterteil bestehenden Dachziegel, wobei zwischen beiden Teilen ein von einem Wärmeträger durchströmter Kanal in Form einer Nut ausgebildet ist. Die Ein- und Auslassöffnung für den Wärmeträger befindet sich hierbei direkt an dem oberen Ende beziehungsweise dem Kopfbereich des Dachziegels. Innerhalb der Verlattung des Daches müssen gemäß dieser Schrift zwar keine zusätzlichen Kanäle ausgebildet sein, dennoch ist die Dichtheit des zusammengebauten Systems von Ober- und Unterteil ein Problem. Aus diesem Grund wird gemäß dieser Schrift vorgeschlagen, zur Abdichtung ein Dichtungsmittel am Umfangsrand zwischen beiden Teilen vorzusehen.

Ausgehend von diesem Stand der Technik ist es nun Aufgabe der vorliegenden Erfindung, eine Solardach- oder Fassadendach- Konstruktion bereitzustellen, die sowohl als Photovoltaikanlage als auch als Thermieanlage fungiert und deren Aufbau und Montage unabhängig von räumlichen Abmessungen unkompliziert und schnell ist, deren Solarmodule und elektrischen Bauteile vor Witterungseinflüssen, insbesondere vor extremen Sonneneinstrahlungen, geschützt sind und die gleichzeitig, insbesondere bei extremer Sonneneinstrahlung, einen hohen Wirkungsgrad erzielt.

Gelöst wird diese Aufgabe mit einer Solardach- oder Solarfassaden- Konstruktion gemäß den Merkmalen des Patentanspruchs 1.
Vorzugsweise Ausgestaltungen ergeben sich aus den Unteransprüchen.

Die erfindungsgemäße Konstruktion eines Daches ist dazu ausgelegt, sowohl als Photovoltaikanlage wie auch als Solartherminanlage zu arbeiten.

Solarthermische Anlagen bestehen aus Solarkollektoren in Form von Vakuumröhrenkollektoren oder Flachkollektoren, einem Rohrsystem für ein Wärmeträgermedium, einem Wärmespeicher und diversen Steuer-, Mess- und Regelsystemen.
Die solarthermische Anlage nach der Erfindung weist einen Kollektor in Form des Flachkollektortyps auf. Die Dachelemente liegen erfindungsgemäß direkt sowohl auf den jeweiligen Dachlatten als auch auf dem Kollektor oder den Leitblechen der Rohre für das Wärmeträgermedium auf. Die Wärmeübertragung erfolgt unmittelbar mechanisch ohne Zwischenräume. Die mit Solarmodulen versehenen Dachelemente sind in Doppeldeckung und im Kreuzverbund verlegt, wobei alle elektrischen Anschlüsse auf der Dachinnenseite geführt sind. Die Solarmodule sind weiterhin in ihren räumlichen Abmessungen derart an den Dachelementen angebracht, beispielsweise durch mechanische Befestigungsmittel oder durch Verkleben, dass die Oberfläche des gesamten Dachs ohne Abschattungen nur von Solarelementen bedeckt ist.

Vorteilhafterweise können zusätzlich zur Abdichtung und zur Erhöhung der Wärmeabsorption die einzelnen Dachelemente an der Unterseite, bzw. an ihren, den Solarzellen abgewandten Seiten, noch mit einer entsprechenden Beschichtung versehen sein.
Die Kollektoren mit den Rohrleitungen sind in Richtung Dachinnenraum von einer wärmereflektierenden Schicht abgedichtet. Der geschlossene Raum, den die Thermieanlage in ihrer Höhe von den Dachelementen bis zur Reflexionsschicht einnimmt, entspricht den Abmessungen der Verlattung, so dass sich für die Höhe von Kollektoren und Rohrsystem im dargestellten Beispiel nur ca. 30 mm ergeben.
Da es sich bei der Dachkonstruktion bevorzugt um eine Indach- Bauart handelt, ist eine Luftzirkulation zwischen Dachelementen und Thermieanlage ausgeschlossen. Hierdurch erfolgt eine Wärmeübertragung mit nur minimalen Verlusten.

Es ist weiterhin bekannt, dass die technischen Daten von Solarzellen stark temperaturabhängig sind. Bei einem Anstieg der Temperatur kann auch der Kurzschlussstrom einer Solarzelle um bis zu 0,7 % Grad Celsius / Grad ansteigen und die Leerlaufspannung um bis zu 2 mV/° Celsius sinken. Bei steigender Temperatur ist der Spannungsabfall größter als die Erhöhung des erzeugten elektrischen Stromes. Mit steigender Temperatur sinkt bekanntlich die elektrische Spannung bis zu 0,6 % pro Grad Celsius.

Die erfindungsgemäße Konstruktion berücksichtigt diese technischen Eigenschaften von Solarzellen, indem das Thermiesystem nicht nur einem möglichst großen Wärmeertrag generiert, sondern gleichzeitig auch die Funktion der Kühlung übernimmt. Die Konstruktion ist besonders für Gegenden mit erhöhter Sonneneinstrahlung geeignet, da die Solarelemente und ebenso die elektrischen Verbindungen der Photovoltaikanlage vor einem Thermiebrand geschützt sind.

Der elektrische und thermische Wirkungsgrad der erfindungsgemäßen Konstruktion entspricht dem eines Solardachs nach dem Stand der Technik, das Kollektoren verwendet, die Photovoltaik und Solarthermie in einem festen Modul vereinigen. Jedoch gibt es keine Probleme bezüglich der Dichtheit infolge der Verwendung der unterschiedlichen Materialien innerhalb eines Kollektormoduls, bezüglich der Witterungsbeständigkeit der elektrische Verbindungen, bezüglich des Zusammenbaus oder bei der Anpassung an räumliche Abmessungen oder Probleme infolge der Wärmeausdehnung in Form von Spalten und Ritzen zwischen den Kollektormodulen.

Die Montage der erfindungsgemäßen Konstruktion ist überaus einfach. Die Dachelemente bestehen bevorzugt aus einer Faserzementplatte mit den Abmessungen von 400 x 720 mm. Die Ecken des oberen Teils sind abgeschrägt und im unteren Teil ist das Solarmodul aufgebracht. Das Modul erstreckt über die gesamte Breite und nimmt circa 40 % der Gesamtlänge des Elements ein. Das Modul weist bevorzugt ein schwarzes Backsheet auf. Die Kotakte bzw. die Plus- und Minuspole sind im oberen Bereich der Dachelemente oder in dem Bereich, der nicht mit Solarmodulen versehen ist, durch einen Schlitz im Dachelement ins Innere geführt. Sie werden dann mit Lötfahnen befestigt und entsprechend verbunden. Entsprechend dem verwendeten Wechselrichter sind die einzelnen Solarmodule in einer Reihenschaltung oder Parallelschaltung miteinander verbunden.

Die Erfindung soll nachfolgend anhand der Zeichnung der Figuren 1 bis 4 näher erläutert werden.

Dabei zeigen:
Figur 1: die einzelnen Teile einer Ausführungsform der erfindungsgemäßen Solardach-Konstruktionen während ihres Zusammenbaus,
Figur 2: die Anordnung der mit Solarmodulen versehenen Dachelemente auf ihrer Lattung,
Figur 3: eine schematische Darstellung des möglichen Verlaufs der Rohrleitungen des Thermiesystems bei der erfindungsgemäßen Dachkonstruktion,
Figur 4: die Ansicht einer Ausführungsform eines Kollektors oder Wärmeleitbleches zur Aufnahme einer Rohrleitung im Querschnitt.

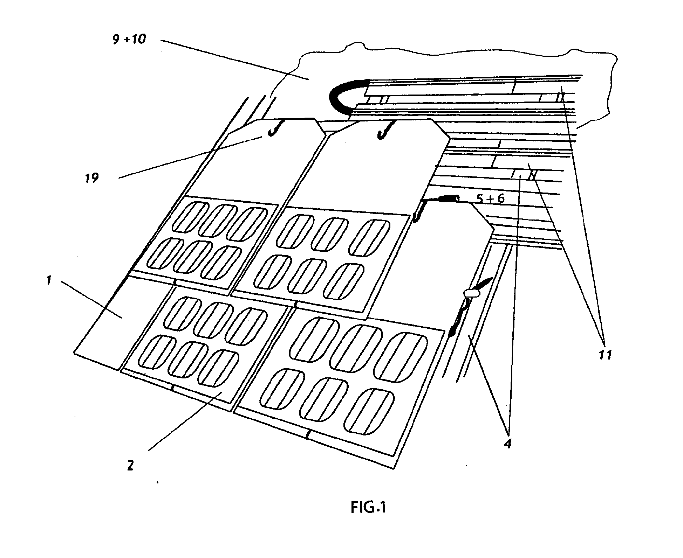

Gemäß Figur 1 ist eine Ausführungsform einer Solardach- Konstruktionen nach der Erfindung während ihres Zusammenbaus dargestellt. Es handelt sich um eine Indach-Konstruktion. Der Oberbau umfasst eine Photovoltaikanlage, die aus Dachelementen 1, beispielsweise aus Faserzement besteht, die im oberen Bereich abgeschrägte Ecken aufweisen und deren unterer Bereich mit Solarmodulen 2 versehen ist.
Die Dachelemente 1 sind zueinander versetzt und überlappend derart angeordnet, dass das gesamte, fertig zusammengesetzte Dach oberflächenmäßig nur von sich nicht überschattenden Solarmodulen 2 bestückt wird.

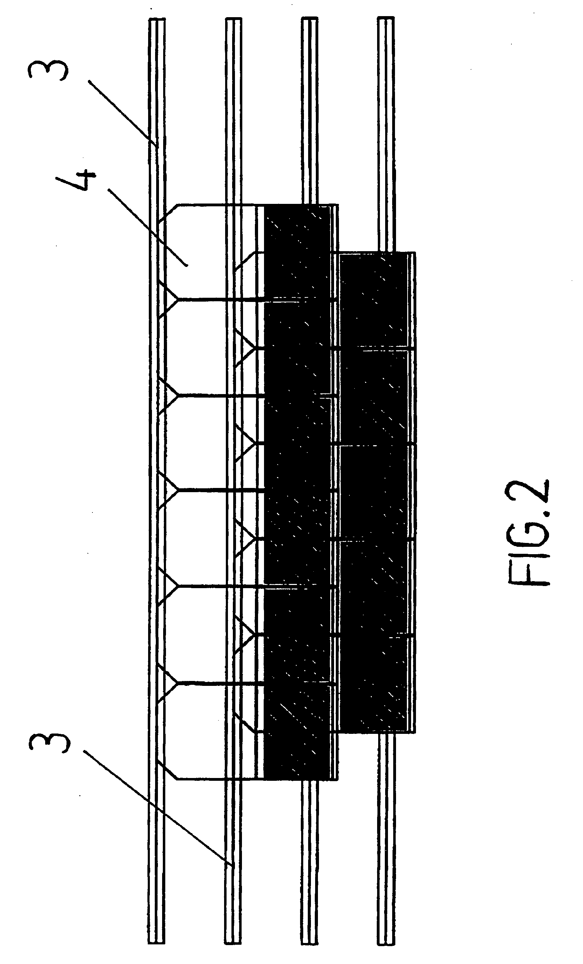

Die Anordnung der einzelnen Module 2 in überlappender Anordnung ist speziell in der Figur 2 dargestellt. Die Latten für die Befestigung der Dachelemente 1 sind mit der Bezugsziffer 3 versehen.

Die einzelnen Dachelemente 1 werden, wie in Figur 1 dargestellt, jeweils von den unteren Rand umgreifenden Sturmhaken 19 gehalten. Die Sturmhaken 19 sind jeweils an den einzelnen Latten 3 befestigt. Das Dachelement 1 hat in einem Bereich, der von dem nächsten überlappenden Dachelement abgedeckt wird, einen Durchbruch. Durch diesen werden die elektrischen Kontakte, über welche die positive und negative Ausgangsleistung der Solarmodule 2 geleitet wird, zur Dachinnenseite zu einer nicht dargestellten Junctionbox geführt und dort verlötet. Für die erfindungsgemäße Konstruktion sollte die Anschlussbox in ihrer Konturabmessung äußerst Platz sparend ausgebildet sein. Von dort erfolgt dann die weitere elektrische Verkabelung 20, 21, vorzugsweise in Flachkabelbauweise, als Parallel- oder Reihenverschaltung der einzelnen Module. Die Module 2 werden so verlegt, dass wenn für eine Reihenverschaltung eine Reihe von Dachelementen 1 mit dem Pluspol nach rechts verlegt wird, die darüber folgende Reihe mit dem Pluspol nach links zeigend verlegt wird.

Durch diese Anordnung wird der kürzeste Weg für die elektrischen Verbindungen der einzelnen Modulreihen ermöglicht und lange Verkabelungswege vermieden.
Die Anzahl der verwendeten Module, die für eine Reihenschaltung vorgesehen sind, hängt von der Art des verwendeten Wechselrichters ab. Am plusseitigen und am minusseitigen Ende eines Strings wird die Leitung dann zu einem Wechselrichter geführt.
Infolge ihrer Anordnung sind die elektrischen Verbindungen, die bevorzugt ebenfalls als Flachkabel ausgebildet sind, unterhalb der Platten 1 und oberhalb des Thermiesystems zwischen den ersten Latten 3 lokalisiert.
Die Höhe der Latten 3 und die der Wärmeleitbleche entspricht im Ausführungsbeispiel einer Höhe von ca. 30 mm. Durch diese Anordnung und den direkten Kontakt werden sowohl die Solarmodule als auch die elektrischen Verbindungen unmittelbar vom solarthermischen System gekühlt.
Das thermische Solarkollektorsystem umfasst gemäß Figur 1 zwei flexible Rohrleitungen 9, 10, die von Wärmeleitblechen 11 aus einem wärmeabsorbierenden Material, beispielsweise Kupfer, Aluminium, Stahl usw. oder auch aus einem Polymer umgeben sind.
Der Thermische Solarkollektor sollte idealerweise im Wellenlängenbereich der Solarstrahlung von 0,3 µm - 2,5 µm einen Absorptionsgrad von 1 aufweisen. Dies ist bei höheren Temperaturen nicht mehr gegeben und daher kann es noch notwendig sein, die thermische Solarkollektoren mit absorbierenden Oberflächenbeschichtungen zu versehen, um Verluste durch Wärmeleitung, Konvektion oder Abstrahlung zu verringern.

Die Leitungen 9, 10 werden von einem Punkt vom Dach geführt und über einen Heizkreisverteiler verbunden. Von diesem werden zwei Leitungen zum Speichermedium mit Wärmetauscher und der Pumpe verlegt. Die zwischen Solarkollektoren und Wärmespeicher zirkulierende Flüssigkeit ist beispielsweise ein Gemisch aus Wasser und Glykol, z.B. Propylenglykol.

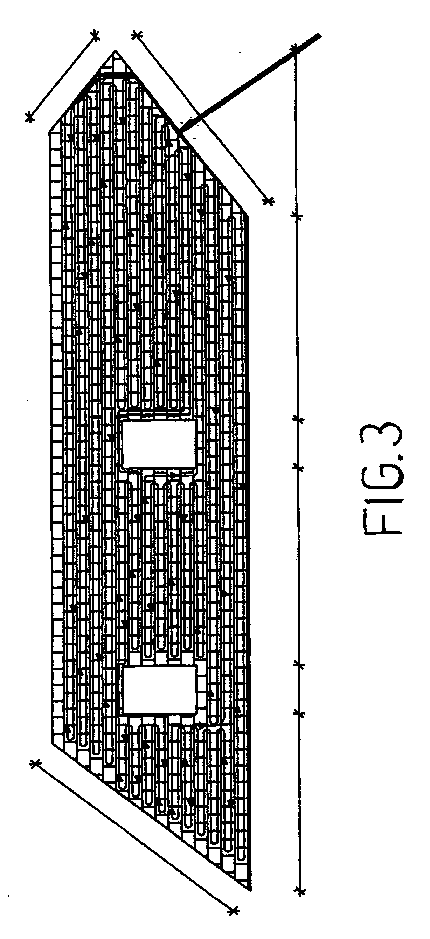

Die Figur 3 zeigt beispielhaft den Verlauf der einzelnen Strömungsabschnitte für die erfindungsgemäße Dachkonstruktion. Das Dach ist hierbei, bedingt durch bautechnische Maßnahmen, in unterschiedliche Strömungsabschnitte unterteilt. Die Fließrichtung des Wärmemediums ist durch die dargestellten Pfeile angegeben. Der Verlauf der Rohrleitungen wird im Ausführungsbeispiel durch die beiden Fensteröffnungen bestimmt.

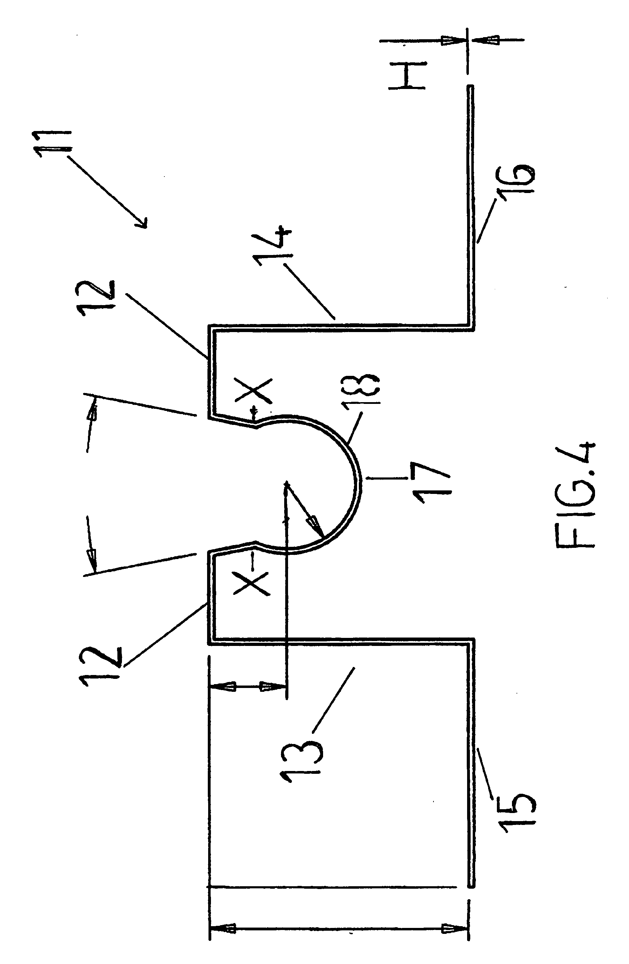

Die Figur 4 zeigt einen speziell für die erfindungsgemäße Konstruktion vorgesehenen Solarkollektor in Form eines Wärmeleitblech 11 im Querschnitt. Das Leitblech 11 ist zur Aufnahme der Rohrleitung 9, 10 umgekehrt U-förmig mit einem oberen waagerechten Abschnitt 12 und zwei parallel vertikal verlaufenden Schenkeln 13, 14 ausgebildet, an die sich wiederum je ein waagerecht horizontal verlaufender Abschnitt 15, 16 anschließt. Innerhalb des waagerechten Abschnitts ist eine Nut oder Auskerbung 17 derart vorgesehen, dass eine federnde Rastverbindung zwischen der Rohrleitung 9, 10 und dem Leitblech ausgebildet wird. Die Auskerbung 17 erstreckt sich zunächst vom waagerechten Abschnitt 12 bis zu einem Punkt X zulaufend verjüngend, um dann einen Abschnitt 18 zu bilden, der der Kontur des Rohres 9, 10 entsprechend angepasst ist. Der Abschnitt 18 des Leitbleches 11 ist vorzugsweise oberhalb der Horizontalebene H der waagerechten Abschnitte 12 angeordnet. Somit erfolgt eine optimale und unmittelbare Absorption der von den Dachelementen abgegebenen Wärme, da infolge der Konfiguration der Wärmeleitbleche 11 die Dachelemente 1 im direkten Kontakt mit den Rohrleitungen 9, 10 liegen.

Die erfindungsgemäße Solardachkonstruktion zeichnet sich infolge der Verwendung der variablen Bauteile durch eine einfache Montage aus, kann problemlos an unterschiedliche Dachabmessungen individuell angepasst werden und ist trotzdem relativ kostengünstig. Die erfindungsgemäße Konstruktion hat einen hohen Wirkungsgrad, bedingt durch die Kombination von verschiedenen Merkmalen wie Indach- Bauart, geringe Bauhöhe und Flachbauweise, besondere Ausgestaltung der Wärmeleitbleche zur Solarenergieübertragung und gleichzeitige Kühlung des Solarmodule und elektrischen Verbindungen, wodurch ein Leistungsabfall infolge eines Temperaturanstiegs verhindert wird. Die erfindungsgemäße Dachkonstruktion ist daher besonders auch für den Betrieb in wärmeren Gegenden vorgesehen.

## Patentansprüche

1. Solardach- oder Solarfassaden- Konstruktion umfassend eine Photovoltaikanlage mit Dachelementen aus Faseraement, Beton, Ton, Metall, Kunststoff, die reihenweise zueinander versetzt und überlappend angeordnet sind und wobei der nicht überlappende Bereich Solarzellen aufweist, die zur Erzeugung von Strom über Kontaktmittel miteinander elektrisch verbindbar sind und mit einer Thermieanlage mit Solarkollektoren und einem Rohrleitungssystem, in dem ein Wärmeträgermedium zirkuliert,
**dadurch gekennzeichnet,**
**dass** der nicht überlappende Bereich der Dachelemente (1) je in seiner Gesamtheit von den Solarzellen oder Modulen (2) bedeckt ist,
**dass** die Solarkollektoren (11) der Thermieanlage räumlich im Bereich zwischen ersten Latten (3) zur Befestigung der Dachelemente (1) vorgesehen sind,
**dass** die Solarkollektoren (11) zur Übertragung der Wärmeenergie direkten Kontakt zu den Dachelementen (1) aufweisen und,
**dass** die Thermieanlage sowohl die Temperatur der Solarmodule (2) wie auch die der elektrischen Kontaktmittel (5, 6, 7) der Solarmodule steuert.

2. Solardach- oder Solarfassaden- Konstruktion nach Anspruch 1,
**dadurch gekennzeichnet,**
**dass** jeder ersten Latte (3) wenigstens eine Konterlatte (4) und jeder Konterlatte (4) eine zweite Latte zugeordnet ist und zwischen Konterlatte (4) und zweiter Latte eine Wärme reflektierende Unterspannbahn (8) angeordnet und befestigt ist.

3. Solardach- oder Solarfassaden- Konstruktion nach Anspruch 1 oder 2,
**dadurch gekennzeichnet,**
**dass** die Dachelemente (1) an ihrer Unterseite mit einer Wärmeleitfolie versehen sind.

4. Solardach- oder Solarfassaden- Konstruktion nach Anspruch 1, 2 oder 3
**dadurch gekennzeichnet,**
**dass** der aus Wärme absorbierendem Metall bestehende Solarkollektor (11) der Thermieanlage parallel verlaufend zu den ersten Latten (3) zur Befestigung der Dachelemente (1) angeordnet ist und mindestens eine Rohrleitung (9, 10), vorzugsweise aus flexiblem Material, zur Zirkulation eines Wärmeträgermediums aufweist.

5. Solardach- oder Solarfassaden- Konstruktion nach Anspruch 4,
**dadurch gekennzeichnet,**
**dass** der Solarkollektor ein Leitblech (11) zur Aufnahme der Rohrleitung (9, 10) ist und im Querschnitt umgekehrt U-förmig mit einem oberen waagerechten Abschnitt (12) und zwei parallel vertikal verlaufenden Schenkeln (13, 14) ausgebildet ist, an die sich wiederum je ein waagerecht horizontal verlaufender Abschnitt (15, 16) anschließt und, dass die Rohrleitung (9, 10) in eine innerhalb des waagerechten Abschnitts (12) der Kontur der Rohrleitung (9, 10) angepasste Nut oder Auskerbung (17) federnd einrastbar ist.

6. Solardach- oder Solarfassaden- Konstruktion nach Anspruch 5,
**dadurch gekennzeichnet,**
**dass** die Nut oder Auskerbung (17) für die Schaffung einer federnden Rastverbindung derartig ausgebildet ist, dass diese sich zunächst vom waagerechten Abschnitt (12) bis zu einem Punkt X zulaufend verjüngt, um dann einen der Kontur des Rohres (9, 10) entsprechenden Abschnitt (18) auszubilden, wobei für einen besseren Temperaturaustausch der der Kontur entsprechende Abschnitt (18) des Leitbleches (11) vorzugsweise oberhalb der Horizontalebene H der waagerechten Abschnitte (12) verläuft.

7. Solardach- oder Solarfassaden- Konstruktion nach einem der Ansprüche 1 bis 6,
**dadurch gekennzeichnet,**
**dass** die elektrischen Kontakt- und Verbindungsmittel (5, 6, 7) der Solarmodule (2) der Photovoltaikanlage und die Rohre (9, 10) der Thermieanlage zwischen den ersten Latten (3) verlaufend angeordnet sind.

8. Solardach- oder Solarfassaden- Konstruktion nach einem der Ansprüche 1 bis 7,
**dadurch gekennzeichnet,**
**dass** die Dachelemente (1) an ihren unteren, die Solarmodule (2) tragenden Abschnitten von an den Latten (3) angebrachten Befestigungsmitteln (19), vorzugsweise von Sturmhaken, die die Dachelemente (1) umgreifen, gehalten werden.

9. Solardach- oder Solarfassaden- Konstruktion nach einem der Ansprüche 1 bis 8,
**dadurch gekennzeichnet,**
**dass** die Dachelemente (1) ein Solarmodul (2) aus sechs miteinander verschalteten Solarzellen aufweisen.

10. Solardach- oder Solarfassaden- Konstruktion nach einem der Ansprüche 1 bis 9,
**dadurch gekennzeichnet,**
**dass** die Dachelemente (1) mit den Solarmodulen (2) derartig verlegt sind, dass wenn in einer Reihe die Solarelemente mit einem rechtsseitigen Pluspol angeordnet ist, der Pluspol der darüber liegende Reihe auf der linken Seite liegt ist, so dass ein kurzer Weg für die elektrischen Verbindungen (5, 6, 7) zwischen den einzelnen Reihen gegeben ist.

11. Solardach- oder Solarfassaden- Konstruktion nach einem der Ansprüche 1 bis 10,
**dadurch gekennzeichnet,**
**dass** die Konstruktion eine Indach- Bauweise ist.

## Claims

1. A solar roof or solar facade construction, comprising a photovoltaic system with roof elements of fiber cement, concrete, clay, metal or plastic, wherein said roof elements are lined up in rows that are offset relative to one another and arranged in an overlapping fashion, and wherein the non-overlapping area features solar cells that can be electrically connected to one another with the aid of contacting means in order to generate power, as well as a thermal system with solar collectors and a pipeline system, in which a heat transfer medium circulates,
**characterized in**
**that** the non-overlapping area of the roof elements (1) respectively is entirely covered by the solar cells or modules (2),
**that** the solar collectors (11) of the thermal system are spatially arranged in the area between first slats (3) for mounting the roof elements (1),
**that** the solar collectors (11) are in direct contact with the roof elements (1) in order to transfer the thermal energy, and
**that** the thermal system controls the temperature of the solar modules (2), as well as of the electric contacting means (5, 6, 7) of the solar modules.

2. The solar roof or solar facade construction according to claim 1,
**characterized in**
**that** at least one counter-slat (4) is assigned to each first slat (3) and a second slat is assigned to each counter-slat (4), and in that a heat-reflecting sarking membrane (8) is arranged and fixed between a counter-slat (4) and a second slat.

3. The solar roof or solar facade construction according to claim 1 or 2,
**characterized in**
**that** the roof elements (1) are provided with a heat-conducting foil on their underside.

4. The solar roof or solar facade construction according to claim 1, 2 or 3
**characterized in**
**that** the solar collector (11) of the thermal system, which consists of a heat-absorbing metal, is arranged such that it extends parallel to the first slats (3) for mounting the roof elements (1) and features at least one pipeline (9, 10), preferably of flexible material, for circulating a heat transfer medium.

5. The solar roof or solar facade construction according to claim 4,
**characterized in**
**that** the solar collector consists of a guide plate (11) for accommodating the pipeline (9, 10) and has an inversely U-shaped cross section with an upper horizontal section (12) and two parallel, vertically extending limbs (13, 14) that respectively are once again connected to a horizontally extending section (15, 16), and in that the pipeline (9, 10) can be elastically snapped into a groove or notch (17) within the horizontal section (12) that is adapted to the contour of the pipeline (9, 10).

6. The solar roof or solar facade construction according to claim 5,
**characterized in**
**that** the groove or notch (17) for producing an elastic snap-in connection is initially tapered from the horizontal section (12) up to a point X and ultimately forms a section (18) that corresponds to the contour of the pipe (9, 10), wherein the section (18) of the guide plate (11) that corresponds to the contour preferably extends above the horizontal plane H of the horizontal sections (12) in order to achieve a superior temperature exchange.

7. The solar roof or solar facade construction according to one of claims 1 to 6,
**characterized in**
**that** the electric contacting and connecting means (5, 6, 7) of the solar modules (2) of the photovoltaic system and the pipes (9, 10) of the thermal system are arranged such that they extend between the first slats (3).

8. The solar roof or solar facade construction according to one of claims 1 to 7,
**characterized in**
**that** the roof elements (1) are held by mounting means (19) arranged on the slats (3), preferably by storm hooks that encompass the roof elements (1), on their lower sections that carry the solar modules (2).

9. The solar roof or solar facade construction according to one of claims 1 to 8,
**characterized in**
**that** the roof elements (1) feature a solar module (2) that is composed of six interconnected solar cells.

10. The solar roof or solar facade construction according to one of claims 1 to 9,
**characterized in**
**that** the roof elements (1) with the solar modules (2) are installed in such a way that, if the solar elements are in one row arranged with the positive pole on the right side, the positive pole of the row lying above is positioned on the left side such that the electrical connections (5, 6, 7) between the individual rows only need to be produced over a short distance.

11. The solar roof or solar facade construction according to one of claims 1 to 10,
**characterized in**
**that** the construction is an in-roof construction.

## Revendications

1. Construction de toit solaire ou de façade solaire, comprenant un système photovoltaïque avec des éléments de toit constitués de ciment renforcé de fibres, de béton, d'argile, de métal ou de plastique, lesquels sont agencés par rangées tout en étant décalés et superposés les uns par rapport aux autres, et dans laquelle la région non superposée comporte des cellules solaires aptes à être électriquement reliées les unes aux autres par des moyens de contact pour produire du courant, et avec un système thermique avec des capteurs solaires et un système de conduites dans lequel circule un fluide caloporteur,
**caractérisée en ce**
**que** la région non superposée des éléments de toit (1) est entièrement recouverte par les cellules solaires ou modules (2),
**que** les capteurs solaires (11) du système thermique sont prévus spatialement dans la région entre des premières lattes (3) pour la fixation des éléments de toit (1),
**que** les capteurs solaires (11) sont en contact direct avec les éléments de toit (1) pour la transmission de l'énergie thermique,
**que** le système thermique commande aussi bien la température des modules solaires (2) que celle des moyens de contact électriques (5, 6, 7) des modules solaires.

2. Construction de toit solaire ou de façade solaire selon la revendication 1,
**caractérisée en ce**
**qu'**au moins une contre-latte (4) est attribuée à chaque première latte (3) et une deuxième latte est attribuée à chaque contre-latte (4), et en ce qu'une bande de tension inférieure (8) réfléchissant la chaleur est agencée et fixée entre une contre-latte (4) et une deuxième latte.

3. Construction de toit solaire ou de façade solaire selon la revendication 1 ou 2,
**caractérisée en ce**
**que** les éléments de toit (1) sont pourvus d'un film caloporteur sur leur côté inférieur.

4. Construction de toit solaire ou de façade solaire selon la revendication 1, 2 ou 3,
**caractérisée en ce**
**que** le capteur solaire (11) du système thermique, constitué d'un métal absorbant la chaleur, est agencé de manière à s'étendre parallèlement aux premières lattes (3) pour la fixation des éléments de toit (1), et comporte au moins une conduite (9, 10), de préférence constituée d'un matériau souple, pour la circulation d'un fluide caloporteur.

5. Construction de toit solaire ou de façade solaire selon la revendication 4,
**caractérisée en ce**
**que** le capteur solaire est une tôle de guidage (11) pour la réception de la conduite (9, 10), conçue avec une section transversale en forme de U inversé avec une section supérieure horizontale (12) et deux branches parallèles (13, 14) s'étendant verticalement, suivies d'une section s'étendant horizontalement (15, 16), et en ce que la conduite (9, 10) peut être encliquetée de façon élastique dans une rainure ou une encoche (17) adaptée dans la section horizontale (12) du contour de la conduite (9, 10).

6. Construction de toit solaire ou de façade solaire selon la revendication 5,
**caractérisée en ce**
**que** la rainure ou l'encoche (17) est conçue pour créer une liaison par encliquetage élastique, de façon à ce que celle-ci s'affine tout d'abord à partir de la section horizontale (12) jusqu'à un point X, pour ensuite former une section (18) correspondant au contour de la conduite (9, 10), sachant que la section (18) de la tôle de guidage (11) qui correspond au contour s'étend de préférence au-dessus du plan horizontal H des sections horizontales (12), pour un meilleur échange de chaleur.

7. Construction de toit solaire ou de façade solaire selon l'une des revendications 1 à 6,
**caractérisée en ce**
**que** les moyens de contact et de liaison électriques (5, 6, 7) des modules solaires (2) du système photovoltaïque et les conduites (9, 10) du système thermique sont agencés de manière à s'étendre entre les premières lattes (3).

8. Construction de toit solaire ou de façade solaire selon l'une des revendications 1 à 7,
**caractérisée en ce**
**qu'**au niveau de leurs sections inférieures portant les modules solaires (2), les éléments de toit (1) sont maintenus par des moyens de fixation (19) fixés sur les lattes (3), de préférence par des crochets anti-tempête entourant les éléments de toit (1).

9. Construction de toit solaire ou de façade solaire selon l'une des revendications 1 à 8,
**caractérisée en ce**
**que** les éléments de toit (1) comportent un module solaire (2) composé de six cellules solaires connectées entre elles.

10. Construction de toit solaire ou de façade solaire selon l'une des revendications 1 à 9,
**caractérisée en ce**
**que** les éléments de toit (1) avec les modules solaires (2) sont posés de manière à ce que lorsque dans une rangée, les éléments solaires sont agencés avec une borne positive à droite, la borne positive de la rangée disposée au-dessus se trouve du côté gauche, de façon à définir un chemin court pour les liaisons électriques (5, 6, 7) entre les différentes rangées.

11. Construction de toit solaire ou de façade solaire selon l'une des revendications 1 à 10,
**caractérisée en ce**
**que** la construction est une construction intégrée au toit.
